# EUROPEAN PATENT APPLICATION

(11) **EP 4 741 866 A1**
(43) Date of publication of application: **13.05.2026**
(21) Application number: 24212393.3
(22) Date of filing: 12.11.2024
(51) Int. Cl.: G01S 5/02, G01S 11/02, G01S 1/10, G01S 5/08, G01S 5/14

(54) **WIRELESS LOCATION OF A DEVICE USING BEAM FORMING**

(71) Applicant: NXP B.V., 5656 AG Eindhoven (NL)
(72) Inventor: Tertinek, Stefan, 5656 AG Eindhoven (NL); Lugitsch, David, 5656 AG Eindhoven (NL)
(74) Representative: Krott, Michel

(57) **Abstract**

There is described a method for locating a device (110, 120), the method comprising:
i) forming a beam (150) from a first wireless transmitter signal and a second wireless transmitter signal at a transmitter device (120);
ii) performing a scan operation for a receiver device (110) with the formed beam (150);
iii) evaluating at least one criterium associated with the scan operation of the formed beam (150); and
iv) locating the device (110, 120) based on the evaluated at least one criterium.

## Description

### TECHNICAL FIELD

The present disclosure relates to a method for locating a device, the method comprising: forming a beam from a first wireless transmitter signal and a second wireless transmitter signal at a transmitter device, performing a scan operation for a receiver device with the formed beam, evaluating at least one criterium associated with the scan operation of the formed beam, and locating the device based on the evaluated at least one criterium. Further, the disclosure refers to a transmitter device and a wireless communication system.

### TECHNICAL BACKGROUND

Radio frequency (RF) devices such as ultra-wide band (UWB) devices can be used for localization operations such as secure ranging and distance estimation. For example, UWB may be especially suitable due to the ability to generate time stamps from received RF signals with high accuracy. In an example, multiple UWB devices can operate together and thereby localize another device, such as a key fob or a smart phone in a vehicle.

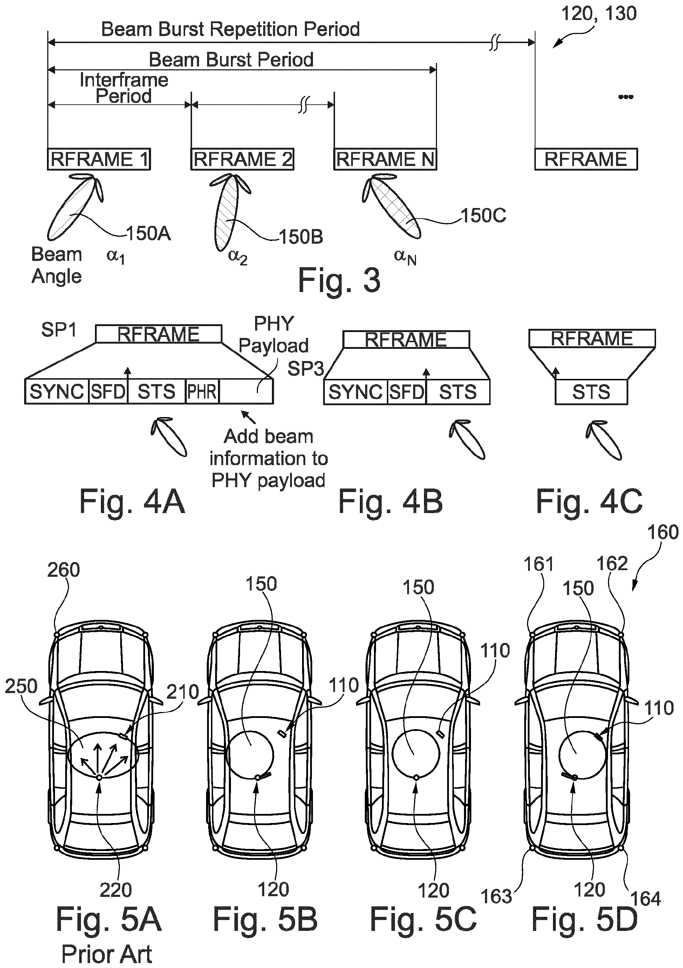

**Figure 5A** shows an example of a conventional localization operation. The use case is key fob 210 inside-outside detection for vehicle access. The vehicle is equipped with four UWB anchors 260 in the respective corners of the vehicle. Typical setup at Tierls/OEMs: four anchors 260 outside at the bumpers and one anchor 220 inside in the center. The vehicle determines whether a key fob 210 is inside or outside before a driver can start the engine. For illustration, the key fob 210 is placed at the co-driver seat in the figure and all anchors 220, 260 perform ranging with the key fob 210. Finally, range values (distances) are processed in a central computer node to localize the key fob 210.

However, multiple signal paths 250 will overlap in this example, thereby generating errors in the time stamp generation and ranging. The multi-path reflections will strongly influence ranging results i) from the inside anchor 220, due to dense multipath environment (seats, dashboard, etc.), and ii) from the outside anchors 260, due to attenuation and reflections from the car body.

The inside anchor 220 has a single antenna and is connected to a single transmitter TX. The measured beam pattern is just the antenna gain pattern (single TX), showing that the gain is high towards the driver seat, the center console, and the co-driver seat. Thus, as the RFRAME is radiated uniformly within the beamwidth of the antenna, strong multi-path reflections will overlap at the key fob 210 causing distance estimation errors.

Accurate time stamp generation depends strongly on the environment, as the RF signal reflected at objects, such as walls or surfaces, can overlap at the receiver and cause distortion in the received signal, leading to an incorrect time stamp estimation and thus ranging and distance errors. For example, locating a key fob in a car interior (as shown in Figure 5A) remains a big challenge due to the dense multipath environment.

Conventionally, there are a number of methods to improve the ranging/localization accuracy in such environments, e.g. increase the number of anchor devices, use additional angle-of-arrival (AoA) information, or apply machine learning on the channel impulse response to e.g. filter bad ranging estimates. However, localization based on RF (in particular UWB) devices still remains a challenge, especially in highly reflective multipath environments such as a car interior.

### SUMMARY OF THE DISCLOSURE

There may be a need to localize a wireless device in an efficient and reliable manner. A method, a transmitter device, and a wireless communication system are provided.

According to an aspect of the present disclosure, it is described a method for locating/localization a (RF) device (e.g. a transmitter device or a receiver device, in a specific example a key fob), the method comprising:
i) forming a (common) beam (in particular with a main lobe) from (at least) a first wireless transmitter signal and a second wireless transmitter signal (in particular provided from an antenna array) (in particular at a transmitter device, more in particular a transceiver device);
ii) performing a scan operation (beam steering) for a (RF) receiver device (in particular a transceiver device) with the formed beam (e.g. using different transmission angles for the formed beam);
iii) evaluating (e.g. at the receiver device) at least one criterium (e.g. received power) associated with the scan operation of the formed beam (e.g. comparing intensity of different beam transmission positions); and
iv) locating (e.g. by the transmitter device, the receiver device, or a further entity) the device (the transmitter device may localize the receiver device and/or the receiver device may localize the transmitter device) based on the evaluated at least one criterium (e.g. selecting optimal beam path).

According to a further aspect of the present disclosure, it is described a transmitter device (in particular a transceiver device), comprising:
i) a first transmitter antenna to transmit a first wireless transmitter signal;
ii) a second transmitter antenna to transmit a second wireless transmitter signal; and
iii) a transmitter control device (in the transmitter device, coupled to the transmitter device, or remote of the transmitter device) configured to:
   a) form a beam from the first wireless transmitter signal and the second wireless transmitter signal (e.g. using an antenna array), and
   b) transmit/steer the formed beam to thereby perform a scan operation for a receiver device, so that a device (the transmitter device may localize the receiver device and/or the receiver device may localize the transmitter device) is located based on an evaluation of at least one criterium associated with the scan operation of the formed beam.

According to a further aspect of the present disclosure, it is described a wireless communication system, comprising:
i) the transmitter device as described above, and
ii) the receiver device (in particular configured to receive the formed beam of the transmitter device).

In the context of the present document, the term "transmitter device" may in particular refer to a wireless RF device with a transmitter functionality. For example, the transmitter device may comprise an antenna array with at least two antennas. In a preferred example, the transmitter device is configured to form a beam from at least two transmitted signals. The transmitter device may be a transceiver, i.e. also configured to receive RF signals. For example, the transmitter device may receive an evaluation report, e.g. from a receiver device. The transmitter device may also be termed "initiator" device.

In the context of the present document, the term "receiver device" may in particular refer to a wireless RF device with a receiver functionality (e.g. a mobile device such as a smart phone or a key fob). For example, the receiver device may comprise one or more antennas for receiving a transmitted signal, in particular a formed beam. In a preferred example, the receiver device may be configured to receive the formed beam from different transmission positions. The receiver device may comprise a receiver control device, configured to evaluate the formed beam, received in different transmission positions, with respect to the criterium. The receiver device may be further configured to receive transmission configuration information, thereby being prepared for the signals to be received. The receiver device may be a transceiver, i.e. also configured to transmit RF signals. For example, the receiver device may transmit the evaluation report, e.g. to the transmitter device. The receiver device may also be termed "responder" device.

In the context of the present document, the term "beam forming" (or "beam steering") may in particular refer to an established technique to control the phase and/or amplitude of transmitted signals in order to create a pattern of constructive and/or destructive interference in the wavefront. In an example, by manipulating the phase and/or amplitude of the transmitter, it may be possible to form and change the beam (antenna pattern) of the whole configuration.

In the context of the present document, the term "scan operation" may in particular refer to a sweeping of the formed beam over two or more transmission positions. For example, a first transmission position may be at an angle of 20°, a second transmission position may be at an angle of 0°, and a third transmission position may be at an angle of -20°. Steering the beam to these positions (sweeping over a plurality of transmission positions/angles) may thus be considered as a scan operation of the formed beam. From these transmission positions, one may be selected for a localization operation based on a pre-defined criterium, e.g. highest power at the receiver device.

In the context of the present document, the term "criterium associated with the scan operation" may in particular refer to a specific signal property such as signal intensity, transmitted power, signal-to-noise ratio, etc. Such a criterium may be evaluated for different transmission positions of the formed beam during the scan operation (with respect to the receiver device). In other words, the criteria measured for different transmission positions during the scan operation may be compared with each other. Based on the evaluation, one of the transmission positions may be selected, preferably the optimal beam path. This may be for example the transmission position that leads to the highest signal intensity at the receiver device.

In the present context, the term "control device" may in particular refer to a hardware and/or software configured to perform at least one of the above specified steps such as beam forming, scan operation, evaluating, locating, etc. The control device may be implemented as one or more processors/circuits. Further, the control device may be a controller of an RF device. The control device may be (at least partially) arranged in the RF device (e.g. a module for a vehicle, a smart phone, etc.) or may (at least partially) operate from remote. For example, there may be at least one of the following in the wireless communication system: a transmitter control device, a receiver control device, a common control device, a further entity control device.

According to an exemplary embodiment, the disclosure may be based on the idea that a wireless device can be located in an efficient and reliable manner, when a transmitter device is forming a beam (e.g. using an antenna array) and scans the environment by beam steering for a receiver device, whereby the scan operation is evaluated based on a criterium, so that a localization of the wireless device can be performed using the beam position with the optimal criterium. In other words, a beam is formed for different transmission positions (e.g. angles) and the optimal transmission position with respect to a receiver device is selected. In a basic embodiment, the transmitter device may localize in this manner the receiver device. Yet, the method may be advantageously also used the other way around, so that the transmitter device is searching for the receiver device to be localized thereby itself.

While conventional methods (see above) may provide partial improvements, a completely new approach is described here, wherein beam forming is used in an (UWB) ranging context. By using beam forming, due to its inherent directivity, the RF signal is transmitted only to a desired direction (the receiver device such as the key fob or the smart phone), thereby significantly reducing multipath reflections and improving ranging accuracy.

The aspects defined above and further aspects of the disclosure are apparent from the examples of embodiment to be described hereinafter and are explained with reference to these examples of embodiment. The disclosure will be described in more detail hereinafter with reference to examples of embodiment but to which the disclosure is not limited.

### EXEMPLARY EMBODIMENTS

In an embodiment, performing the scan operation comprises transmitting the formed beam in two or more different transmission positions, in particular transmission angles. This may provide the advantage that an efficient scan operation can be performed. The beam can be scanned/swept over/in the two or more transmission positions, so that the optimum transmission position may be selected (based on the criterium) from the different transmission positions in a straightforward manner. In a specific embodiment, the transmitter device is configured for beam sweeping and starts transmitting a sequence of beam sweeping messages (BM), a so-called beam burst. Each BM may be directed by the (initiator) antenna array towards a configured beam angle.

In an embodiment, the method further comprises receiving the formed beam in at least one transmission position, in particular a specific angle, at the receiver device. This may provide the advantage that the evaluation may be based on the received signal (of the formed beam in a specific transmission position) at the receiver device. The receiver device may hereby serve as a sensor to measure the criterium for different transmission positions of the scan operation.

In an embodiment, evaluating comprises comparing the criteria associated with the scan operation of the formed beam in the two or more transmission positions. By comparing the (measured) criteria, a preferred/optimal transmission position may be selected that is most suitable for a localization (ranging operation). In particular, the most reliable and precise time stamps may be generated for this transmission position. In an example, the evaluation may be done at the receiver device. In another example, the evaluation may be done at the transmitter device or a further entity. In the latter case, the receiver device may (wirelessly) transfer the received data/signal information to provide the criterium to another device.

In an embodiment, evaluating comprises selecting a transmission position based on the comparison of the criteria associated with the scan operation of the formed beam in the two or more transmission positions. In a specific embodiment, having determined the beam quality indicators (BQI), the responder (e.g. receiver device) then selects the optimal beam (transmission position). This selection may be done based on processing the BQIs. For example, if the BQI is given by the total received power, the responder may select the BM that has the highest BQI (i.e. the highest received power). In general, it is expected that the beam with the highest BQI provides the most reliable ranging result.

In an embodiment, the method further comprises providing transmission configuration information, in particular from the transmitter device to the receiver device. In an embodiment, the transmission configuration information comprises information about at least one of the formed beam, the transmission positions (e.g. α1, α2, αn), in particular transmission angles, the scan operation, the transmission timing. In an embodiment, receiving and/or evaluating the formed beam comprises taking into account the transmission configuration information.

In an exemplary embodiment, the transmission configuration information comprises: initially, the initiator transmits a beam configuration message (CM) to the responder which contains information on the ensuing beam sweeping and measurement. For example, the transmission configuration information may comprise at least one of the following: number of messages N, beam angles α₁,..., α_{N}, time interval between two consecutive messages, time stamp for the start of the first message, complex weights applied to the transmitted message for beam forming, channel frequency, number of used antennas, beam characteristics (main lobe beamwidth; number of sidelobes; sidelobe level), beam pattern, including direction of nulls, beam indices (e.g. integer number to index the beams), number of beam sweeping repetitions.

In an example, a beam angle α provides directional information of the beam transmitted from the initiator towards the responder and may, for example, be given as a pair of azimuth angle φ and elevation angle θ relative to the coordinate system of the initiator antenna array; for example: αₖ= (φₖ, θₖ), for k=1, ..., N.

In an embodiment, the method further comprises providing an evaluation report/information/raw data, in particular from the receiver device to the transmitter device. In this manner, the result or the raw data for the evaluation may be transmitted in a flexible manner to the transmitter device or a further entity. Preferably, the receiver device may measure the criteria for different transmission positions. The evaluation of these data may be done flexibly in different manners, e.g. at the receiver device, the transmitter device or a further entity. In an example, the responder sends a beam report message (RM) to the initiator which includes the selected beam e.g. given by a beam index, or beam angle.

In an exemplary embodiment, the responder transmits the BQIs to the initiator, and the initiator selects the optimal beam. In other words, the receiver device sends evaluation report/information to the transmitter device, so that the transmitter device performs the selection. In an example, such a transmission may also be done via a message on an out-of-band link/channel, such as Bluetooth.

In an embodiment, the criterium comprises at least one of intensity, strength, energy, quality, signal-to-noise ratio (of the formed beam in a specific transmission position at the receiver device). In an exemplary embodiment, for each BM, the responder measures the BQI which contains information about how well the BM was received via the beam, such as received power, first-path power, signal-to-noise ratio (SNR), channel impulse response features (such as ratio of first-path power to maximum-path power and/or number of peaks (an indication for the multipath environment)). The BQIs are given for example by Qi, ..., Q_{N}.

In an embodiment, a pre-localization operation is performed, in particular using an angle-of arrival (AoA) method. This may provide the advantage of increasing efficiency and saving time. In an exemplary embodiment, the initiator first receives a frame from the responder, then determines the AoA, and uses this AoA as a first beam angle for the beam sweeping, thereby reducing the number of beam angles needed to determine the optimal beam during the sweeping procedure.

In a specific embodiment, in addition to transmitting the formed beam, the initiator may also receive a formed beam, for example, by processing multiple receive signals and forming a beam in the direction of the given beam angle. The combination of transmission and reception beam forming may improve the localization, e.g. of the key fob or the smart phone.

In an embodiment, the method is performed in the context of ultra-wide band, UWB. In particular, in the context of UWB MMS or UWB NBA-MMS. In an embodiment, the wireless communication system operates in the context of UWB (e.g. the transmitter device and/or the receiver device is an UWB device).

In the context of the present document, the term "ultra-wide band communication" (or ultra-wideband) may refer to a radio technology that can use a very low energy level for short-range, high-bandwidth communications over a large portion of the radio spectrum. UWB may refer to a technology for transmitting information spread over a large bandwidth (> 500 MHz). UWB may be defined as an antenna transmission for which emitted signal bandwidth exceeds the lesser of 500 MHz or 20% of the arithmetic center frequency. UWB transmissions may transmit information by generating radio energy at specific time intervals and occupying a large bandwidth, thus enabling pulse-position or time modulation. The range of UWB may be for example in the range of 10^{th} of meters.

An UWB (RF) ranging system may employ the Time-of-Flight principle to determine the distance between an initiator device and a responder device and/or anchor devices (markers). Usually, a first transceiver sends out a waveform, commonly a chirp or a pulse, which is either reflected by an object or retransmitted by a second transceiver. Based on the amount of time it takes for the reflection or retransmission to reach the originating transceiver's receiver, the distance between the objects can be calculated. The so determined range between the receiver and the transmitter is then used as a control point (to enable access). In the same manner, payload may be transferred using UWB. An UWB communication may for example include impulse-radio-ultra-wide band (IR-UWB) (see for example the standards IEEE802.15.4a and IEEE802.15.4z).

In another embodiment, another wireless communication scheme (in particular according to a standard) may be applied, for example WiFi, NFC, RFID, 5G, 6G etc. In an embodiment, localization comprises applying a ranging method, in particular time-of-flight and/or angle-of-arrival.

In an embodiment, the receiver device comprises a receiver antenna to receive the formed beam in at least one transmission position. In an embodiment, the wireless communication system further comprises an evaluation device, in particular a receiver control device, configured to evaluate the received formed beam with respect to the criterium associated with the scan operation of the formed beam.

In an embodiment, the wireless communication system further comprises a locating device, in particular of the transmitter control device or the receiver control device, configured to locate the transmitter device and/or the receiver device based on the evaluated at least one criterium.

In an embodiment, referring to a scenario with anchor devices, outside anchors and the key fob may perform beam sweeping. In an embodiment, the beam management could be implemented based on an amended Car Connectivity Consortium (CCC) specification. In an embodiment, the role of initiator and responder may be changed, and may be that of an advertiser and observer as defined in the FiRa standard. In an embodiment, once an optimal beam has been selected, the sweeping may be refined with beam angles in a close range of the selected beam angle. In addition, beam tracking may be performed.

In an exemplary embodiment, UWB beamforming can reduce the impact of multipath by directing the radio signal towards a desired direction. Beam management is proposed for UWB secure ranging which makes beamforming applicable in particular to UWB devices that implement ranging standards such as FiRa, IEEE802.15.4a, IEEE802.15.4z, or IEEE802.15.4ab. A specific aspect may be seen in UWB beamforming on secure ranging frames and associated beam management (configure, sweep, measure, select and report the optimal UWB secure beam). The application of the described method may be detected by sniffing the air interface and determining that beam sweeping is performed over multiple messages/frames and/or secure message/frames are used (e.g. IEEE 802.15.4z-compliant frames). In a specific example, the beam management for UWB secure ranging comprises: UWB beam configuration, UWB beam sweeping and measurement, UWB beam selection, and UWB beam reporting.

### BRIEF DESCRIPTION OF THE DRAWINGS

Figure 1 illustrates a wireless communication system, according to an exemplary embodiment of the disclosure.
Figure 2 illustrates a transmitter device, according to an exemplary embodiment of the disclosure.
Figure 3 illustrates an implementation using RF frames, according to an exemplary embodiment of the disclosure.
Figures 4A to 4C illustrate the reduction of complexity of an RF frame, according to exemplary embodiments of the disclosure.
Figure 5A shows a conventional example of localization, while Figures 5B to 5D respectively show locating a device in a vehicle, according to exemplary embodiments of the disclosure.

### DETAILED DESCRIPTION OF THE DRAWINGS

Before referring to the drawings, embodiments will be described in further detail, some basic considerations will be summarized based on which embodiments of the disclosure have been developed.

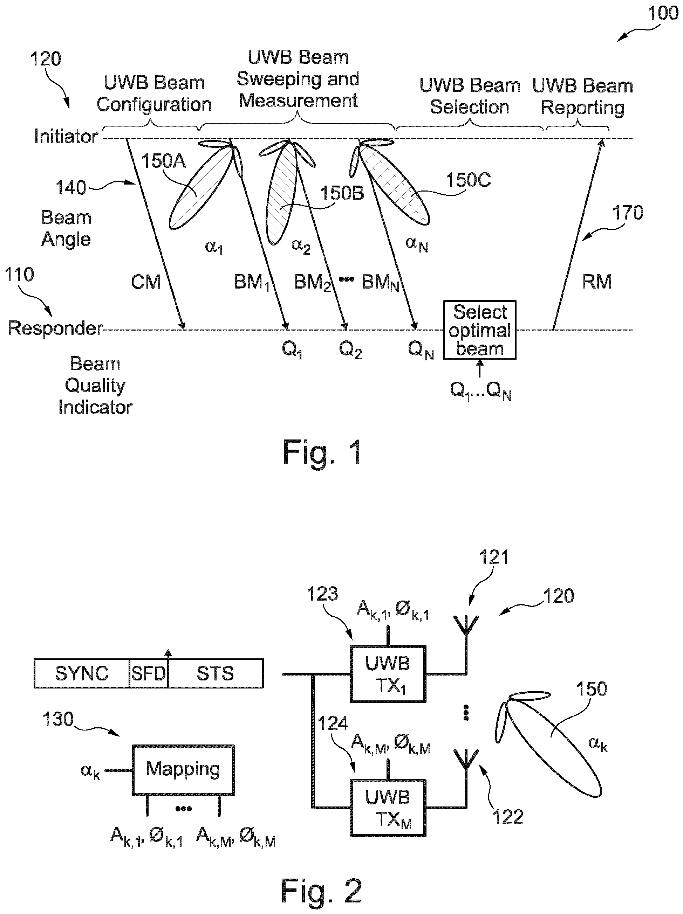

**Figure 1** illustrates a wireless communication system 100, according to an exemplary embodiment of the disclosure. Said wireless communication system 100 comprises a transmitter device 120 (here initiator) and a receiver device 110 (here responder). In the first place, the transmitter device 120 sends a transmission configuration information 140 (configuration message, CM) to the receiver device 110, thereby indicating which signals will be transmitted; e.g. when, at which transmission position, and at which intensity. Then, the transmitter device 120 performs a beam forming/steering operation and transmits the formed beam in three different transmission positions (scan operation). The formed beam is hereby illustrated by the position of the main lobe 150A, 150B, 150C.

The first transmission position is characterized by the first angle α1 and the first main lobe 150A. The second transmission position is characterized by the second angle α2 and the second main lobe 150B. The third transmission position is characterized by the third angle α3 and the third main lobe 150C. Each of these formed beams is received during the scan operation at the receiver device 110.

In this example, the receiver device 110 comprises a receiver control device configured to evaluate each formed beam with respect to a quality criterium (here beam quality indicator, BQI). Then, the receiver device 110 selects the optimal beam based on the comparison of the quality criteria of each transmission position. Afterwards, the selected transmission position is transmitted from the receiver device 110 to the transmitter device 120 as an evaluation report 170 (RM). Alternatively, evaluating the criteria and/or selecting the optimal beam may also be done at the transmitter device 120 or a further entity.

The wireless communication system 100 further comprises a locating device, in particular of the transmitter control device or the receiver control device, configured to locate the transmitter device 120 or the receiver device 110 based on the evaluated at least one criterium (i.e. the selected beam), e.g. using an established ranging scheme.

In other words, assuming an initiator 120 communicates with a responder 110, the beam management comprises the following steps: UWB beam configuration, UWB beam sweeping and measurement, UWB beam selection, and UWB beam reporting. The idea is that the initiator 120 first configures the responder 110 for beam sweeping, and then sweeps multiple beams 150 sequentially across the responder 110. For each beam 150, the responder 110 measures a beam quality indicator (BQI), selects the optimal beam based on the BQIs, and reports the selected beam back to the initiator 120.

**Figure 2** illustrates a transmitter device 120, according to an exemplary embodiment of the disclosure. The transmitter device 120 comprises a first transmitter antenna 121 (coupled to a first transmitter unit 123) to transmit a first wireless transmitter signal and a second transmitter antenna 122 (coupled to a second transmitter unit 124) to transmit a second wireless transmitter signal. In this example the number of transmitters is thus equal to two (M=2). A transmitter control device 130 can be configured to form a beam from the first wireless transmitter signal and the second wireless transmitter signal, and transmit the formed beam to thereby perform a scan operation for a receiver device 110, so that a device 110, 120 can be located based on an evaluation of at least one criterium associated with the scan operation of the formed beam.

In an exemplary embodiment, in order to direct a UWB beam 150 towards the responder 110 at an angle, the transmitter device 120 requires an antenna array with at least two antennas (transmitters) 121, 122 (M>=2). Depending on the antenna arrangement (uniformly/circularly/rectangularly-spaced, etc.) the beam will have a desired spatial characteristic, such as given by a main lobe beamwidth, side lobe ratio etc. The antenna array is connected to multiple transmit chains TX₁ to TX_{M}; each chain "m" may apply an amplitude weight A_{k,m} and a phase shift φ_{k,m} to a BM that is input to each chain, so as to be transmitted (or steered) in the direction of beam angle αₖ.

**Figure 3** illustrates an implementation using RF frames (amended FiRa ranging scheme for the UWB beam sweeping and measurement), according to an exemplary embodiment of the disclosure. The PYH and MAC specifications of the FiRa Consortium define a one-way ranging (OWR) scheme which is used to determine the AoA between an advertiser and an observer. In a similar manner the proposed UWB beam sweeping could be implemented based on OWR in an amended FiRa ranging scheme.

In this scheme, each BM (compare Fig. 1) is a ranging frame (RFRAME) which can be an
- SP1 frame
- SP3 frame
as given in the IEEE 802.15.4z standard (SP = STS packet configurations, STS = scrambled timestamp sequence). The time between two consecutive RFRAMEs is the interframe period, and a series of N RFRAMEs defines a beam burst period. To improve the performance, a beam burst may be repeated at a rate given by the beam burst repetition period. In analogy with the FiRa specification, these time periods may be called interframe interval; beam sweeping and measurement ranging round; and beam block duration.

**Figures 4A to 4C** illustrate the reduction of complexity of an RF frame, according to an exemplary embodiment of the disclosure. **Figure 4** illustrates thereby the common RFRAMEs in IEEE 802.15.4z / FiRa and how they may be used for beam sweeping. Depending on the SP configuration, an RFRAME may comprise a synchronization (SYNC) field, an STS, a start-of-frame delimiter (SFD), a physical layer header (PHR), and/or a payload as defined in the IEEE 802.15.4z. In particular, an RFRAME may contain multiple STS segments. Further still, an RFRAME may only contain an STS e.g. to realize UWB multi-millisecond ranging (MMS) or narrow-band assisted multi-millisecond (NBA-MMS) as defined in the IEEE 802.15.4ab standard.

Depending on the CM, beamforming may be applied to any or all segment(s) of the frame. In one implementation (see Figure 4C), beamforming may only be applied to the STS, thereby saving power, yet making the beam inherently secure.

**Figures 5B to 5D** respectively show localization of a device 110 (e.g. the receiver device in form of a key fob) in a vehicle, according to exemplary embodiments of the disclosure.

The inside anchor is now configured as the transmitter device 120 (initiator) and the key fob as the receiver device 110 (responder) for beam sweeping and measurement. Configuration in this specific example is as follows:
- Number of RFRAMEs: 3
- RFRAME type: SP3 frame
- Beam angles: α₁=-20°, α₂=0°, α₃=20° (i.e. beam angle indices k=1,2,3; compare Figures 5B, 5C, and 5D, respectively)
- Interframe period: 1 ms
- Number of beam bursts: 1
- Number of transmit chains: M=2 (TX₁, TX₂)
- Number of antennas: 2
- Antenna spacing: lambda/2
- UWB channel: CH5 (6.5 GHz)
- Amplitude weighting:
   ∘ A_{k,1}=A_{k,2}=1 (for all beam angle indices k=1,2,3)
- Local oscillator phase shifts:
   ∘ α₁ = -20° → φ_{1,1} = 30°, φ_{1,2} = -30°
   ∘ α₂ = 0° → φ_{2,1} = 0°, φ_{2,2} = 0°
   ∘ α₃ = 20° → φ_{3,1} = -30°, φ_{3,2} = 30°
- Elevation angle is assumed zero for simplicity.

The measured beam pattern is now the original antenna gain pattern multiplied by the array factor which is determined by the antenna array geometry (number of antennas; antenna spacing etc), the amplitude weights and the LO phase shifts.

It is clearly seen how the beam 150 is swept across the key fob 110 for the three beam angles (transmission positions). Due to the directivity provided by beamforming, multi-path reflections can be suppressed. For a beam angle of 20°, for example, the beam is directed directly towards the key fob 110, and multipath reflection are reduced e.g. due to the null in the beam pattern towards the driver seat.

Receiving the three RFRAMES, the key fob 110 can:
- determine three criteria, here BQIs (Q₁, Q₂, Q₃), such as the total received power or the first-path power associated with STS;
- selects the beam with the highest BQI (best criterium); and
- reports the BQI and the associated beam index back to the transmitter device 120.

In this case, the key fob 110 would report beam index = 3 corresponding to Q₃ and α₃=20° which would provide the most reliable ranging result.

### Reference signs

- 100: Wireless communication system
- 110: Receiver device, responder
- 120: Transmitter device, initiator
- 121: First transmitter antenna
- 122: Second transmitter antenna
- 123: First transmitter unit
- 124: Second transmitter unit
- 130: Transmitter control device
- 140: Transmission configuration information
- 150: Formed beam, main lobe
- 161-164: Anchor devices
- 170: Evaluation report/result

## Claims

1. A method for locating a device (110, 120), the method comprising:
forming a beam (150) from a first wireless transmitter signal and a second wireless transmitter signal at a transmitter device (120);
performing a scan operation for a receiver device (110) with the formed beam (150);
evaluating at least one criterium associated with the scan operation of the formed beam (150); and
locating the device (110, 120) based on the evaluated at least one criterium.

2. The method according to claim 1,
wherein performing the scan operation comprises transmitting the formed beam (150) in two or more different transmission positions (α1, α2, αn).

3. The method according to claim 1 or 2, further comprising:
receiving the formed beam (150) in at least one transmission position (α1, α2, αn).

4. The method according to one of the preceding claims,
wherein evaluating comprises comparing the criteria associated with the scan operation of the formed beam (150) in the two or more transmission positions (α1, α2, αn).

5. The method according to one of the preceding claims,
wherein evaluating comprises selecting a transmission position (α1, α2, αn) based on the comparison of the criteria associated with the scan operation of the formed beam (150) in the two or more transmission positions (α1, α2, αn).

6. The method according to one of the preceding claims, further comprising:
providing transmission configuration information (140) from the transmitter device (120) to the receiver device (110),
wherein the transmission configuration information (140) comprises information about at least one of
the formed beam (150),
the transmitting positions (α1, α2, αn),
the scan operation,
the transmission timing.

7. The method according to one of the preceding claims, further comprising:
providing an evaluation report (170) from the receiver device (110) to the transmitter device (120).

8. The method according to one of the preceding claims,
wherein the at least one criterium comprises at least one of intensity, strength, energy, quality, signal-to-noise ratio.

9. The method according to one of the preceding claims,
wherein the method is performed in the context of ultra-wide band, UWB.

10. The method according to one of the preceding claims,
wherein localizing comprises applying at least one of a ranging method, a time-of-flight method, an angle-of-arrival method.

11. A transmitter device (120), comprising:
a first transmitter antenna (121) to transmit a first wireless transmitter signal;
a second transmitter antenna (122) to transmit a second wireless transmitter signal; and
a transmitter control device (130) configured to:
form a beam (150) from the first wireless transmitter signal and the second wireless transmitter signal, and
transmit the formed beam (150) to thereby perform a scan operation for a receiver device (110), so that a device (110, 120) is located based on an evaluation of at least one criterium associated with the scan operation of the formed beam (150).

12. A wireless communication system (100), comprising:
the transmitter device (120) according to claim 11; and
the receiver device (110).

13. The wireless communication system (100) according to claim 12,
wherein the receiver device (120) comprises:
a receiver antenna to receive the formed beam (150) in at least one transmission position.

14. The wireless communication system (100) according to claim 12 or 13, further comprising:
an evaluation device, configured to:
evaluate the received formed beam (150) with respect to the at least one criterium associated with the scan operation of the formed beam (150).

15. The wireless communication system (100) according to one of the claims 12 to 14, further comprising:
a locating device, configured to:
locate the transmitter device (120) or the receiver device (110) based on the evaluated at least one criterium.
